# EUROPÄISCHE PATENTANMELDUNG

(11) **EP 1 882 970 A1**
(43) Veröffentlichungstag der Anmeldung: **30.01.2008**
(21) Anmeldenummer: 07014254.2
(22) Anmeldetag: 20.07.2007
(51) Int. Cl.: G02B 21/00

(54) **Laser-Scanning-Mikroskop zur Fluoreszenzuntersuchung**

(30) Priorität: 28.07.2006 DE 102006034912
(71) Anmelder: Carl Zeiss MicroImaging GmbH, 07745 Jena (DE)
(72) Erfinder: Wolleschensky, Ralf, 07743 Jena (DE)

(57) **Zusammenfassung**

Laser - Scanning - Mikroskop zur Fluoreszenzuntersuchung, in dem der Beleuchtungs- und der Detektionsstrahlengang durch einen dichroitischen Hauptfarbteiler (HFT) optisch verbunden sind, das detektierte Probenlicht mittels weiterer Strahlteiler (NFT) in mehrere Detektoren (DE1,DE2) geleitet wird und
der Einfallswinkel des Beleuchtungslichtes und/ oder der Einfallswinkel des Probenlichtes auf der Teilerfläche mindestens des Hauptfarbteilers (HFT) oder mindestens eines weiteren Teilers (NFT) weniger als 45 Grad beträgt.

## Beschreibung

### Stand der Technik

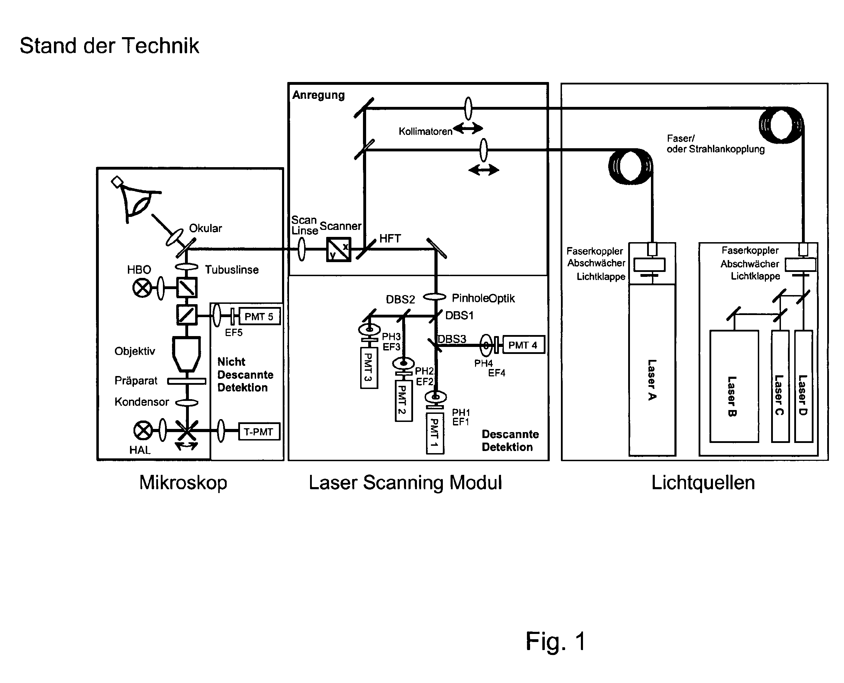

Ein LSM gliedert sich im wesentlichen wie in Fig. 1 dargestellt in 4 Module: Lichtquelle, Scanmodul, Detektionseinheit und Mikroskop. Diese Module werden im folgenden näher beschrieben. Es wird zusätzlich auf DE19702753A1 verwiesen.
Zur spezifischen Anregung der verschiedenen Farbstoffe in einem Präparat werden in einem LSM Laser mit verschiedenen Wellenlängen eingesetzt. Die Wahl der Anregungswellenlänge richtet sich nach den Absorptionseigenschaften der zu untersuchenden Farbstoffe. Die Anregungsstrahlung wird im Lichtquellenmodul erzeugt. Zum Einsatz kommen hierbei verschiedene Laser (Argon, Argon Krypton, TiSa-Laser).
Die Vereinigung unterschiedlicher Wellenlängen im Lichtquellenmodul erfolgt wie in Fig.1 im Lichtquellenmodul rechts dargestellt über Strahlteiler bzw. Spiegel.
Weiterhin erfolgt im Lichtquellenmodul die Selektion der Wellenlängen und die Einstellung der Intensität der benötigten Anregungswellenlänge, z.B. durch den Einsatz eines akusto - optischen Kristalls (AOTF).
Anschließend gelangt die Laserstrahlung über eine Faser oder eine geeignete Spiegelanordnung in das Scanmodul.
Die in der Lichtquelle erzeugte Laserstrahlung wird mit Hilfe des Objektivs beugungsbegrenzt über die Scanner, die Scanoptik und die Tubuslinse in das Präparat fokussiert. Der Fokus rastert punktförmig die Probe in x-y-Richtung ab. Die Pixelverweilzeiten beim Scannen über die Probe liegen meist im Bereich von weniger als einer Mikrosekunde bis zu einigen Sekunden.
Bei einer konfokalen Detektion (descanned Detection) des Fluoreszenzlichtes, gelangt das Licht das aus der Fokusebene (Specimen) und aus den darüber- und darunterliegenden Ebenen emittiert wird, über die Scanner auf einen dichroitischen Strahlteiler (MDB). Dieser trennt das Fluoreszenzlicht vom Anregungslicht. Anschließend wird das Fluoreszenzlicht auf eine Blende (konfokale Blende / Pinhole) fokussiert, die sich genau in einer zur Fokusebene konjugierten Ebene befindet. Dadurch werden Fluoreszenzlichtanteile außerhalb des Fokus unterdrückt. Durch Variieren der Blendengröße kann die optische Auflösung des Mikroskops eingestellt werden.

Hinter der Blende befindet sich ein weiterer dirchroitischer Blockfilter (EF) der nochmals die Anregungsstrahlung unterdrückt. Nach Passieren des Blockfilters wird das Fluoreszenzlicht mittels eines Punktdetektors (PMT) gemessen.
Bei Verwendung einer Mehrphotonen-Absorption erfolgt die Anregung der Farbstofffluoreszenz in einem kleinen Volumen an dem die Anregungsintensität besonders hoch ist. Dieser Bereich ist nur unwesentlich größer als der detektierte Bereich bei Verwendung einer konfokalen Anordnung. Der Einsatz einer konfokalen Blende kann somit entfallen und die Detektion kann direkt nach dem Objektiv erfolgen (non descannte Detektion).

In einer weiteren Anordnung zur Detektion einer durch Mehrphotonenabsorption angeregten Farbstofffluoreszenz erfolgt weiterhin eine descannte Detektion, jedoch wird diesmal die Pupille des Objektives in die Detektionseinheit abgebildet (nichtkonfokal descannte Detektion).

Von einem dreidimensional ausgeleuchteten Bild wird durch beide Detektionsanordnungen in Verbindung mit der entsprechenden Einphotonen bzw. Mehrphotonen-Absorption nur die Ebene (optischer Schnitt) wiedergegeben, die sich in der Fokusebene des Objektivs befindet. Durch die Aufzeichnung mehrerer optische Schnitte in der x-y Ebene in verschiedenen Tiefen z der Probe kann anschließend rechnergestützt ein dreidimensionales Bild der Probe generiert werden.
Das LSM ist somit zur Untersuchung von dicken Präparaten geeignet. Die Anregungswellenlängen werden durch den verwendeten Farbstoff mit seinen spezifischen Absorptionseigenschaften bestimmt. Auf die Emissionseigenschaften des Farbstoffes abgestimmte dichroitische Filter stellen sicher, dass nur das vom jeweiligen Farbstoff ausgesendete Fluoreszenzlicht vom Punktdetektor gemessen wird.

In biomedizinischen Applikationen werden zur Zeit mehrere verschiedene Zellregionen mit verschiedenen Farbstoffe gleichzeitig markiert (Multifluoreszenz). Die einzelnen Farbstoffe können mit dem Stand der Technik entweder aufgrund verschiedener Absorptionseigenschaften oder Emissionseigenschaften (Spektren) getrennt nachgewiesen werden.

Dazu erfolgt eine zusätzliche Aufspaltung des Fluoreszenzlichts von mehreren Farbstoffen mit den Nebenstrahlteilern (DBS) und eine getrennte Detektion der einzelnen Farbstoffemissionen in getrennten Punktdetektoren (PMT x).
Das LSM LIVE der Carl Zeiss Microlmaging GmbH realisiert einen sehr schnellen Linienscanner mit einer Bilderzeugung um 120 Bildern pro Sekunde (http://www.zeiss.de/c12567be00459794/Contents-Frame/fd9fa0090eee01 a641256a550036267b).

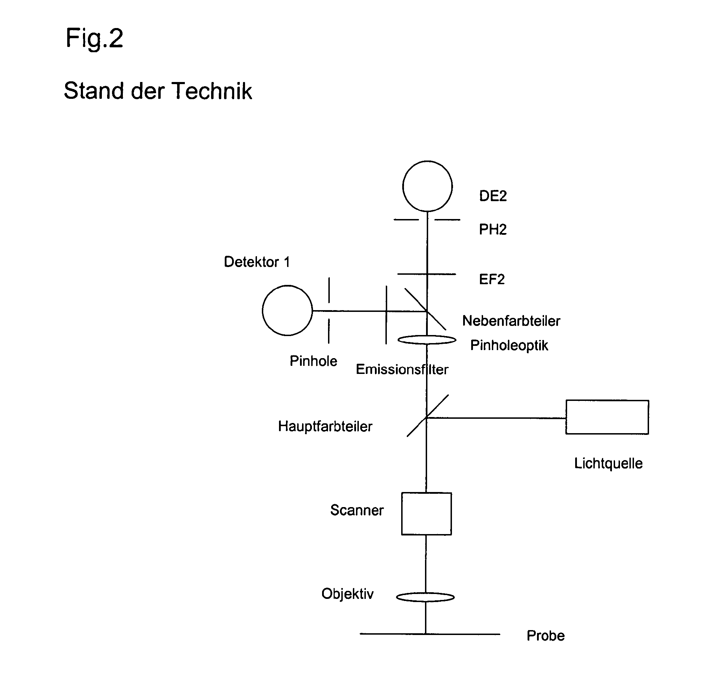

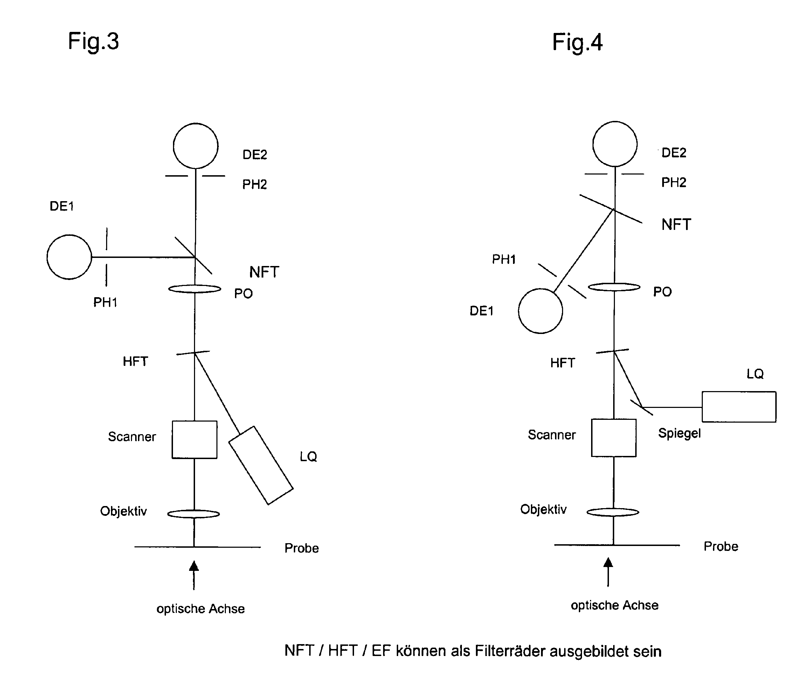

In Fig. 2 ist der Stand der Technik und in Fig. 3 die Erfindung im Detail dargestellt.
In Fig. 2 sind ist ein Hauptfarbteiler zur Einspiegelung einer Lichtquelle in Richtung der Probe über ein Objektiv vorgesehen. Das Probenlicht gelangt durch den Hauptfarbteiler HFT durch in Richtung der Detektoren DE 1 und 2 über eine Pinholeoptik und einen Nebenfarbteiler. Hierbei erfolgt für das Probenlicht eine Unterdrückung des von der Probe reflektierten Beleuchtungslichtes und Streulichts, um gezielt Fluoreszenzerscheinungen untersuchen zu können.
Zusätzlich sind vor den Detektoren besonders schmalbandige Emissionsfilter EF angeordnet, um restliche Störstrahlung auszublenden.
Haupt- und Nebenfarbteiler sind jeweils in einem Winkel von 45 Grad zur optischen Achse angeordnet.

Vorteilhaft erfolgt erfindungsgemäß in Fig. 3 eine Anordnung der teilverspiegelten Fläche des Hauptfarbteilers in einem Winkel kleiner 45 Grad zur optischen Achse. Die Lichtquelle wird unter einem Winkel von kleiner 90 Grad zur Optischen Achse des Mikroskops angeordnet. In Abbildung 4 ist eine weitere erfindungsgemäße Anordnung dargestellt. Zusätzlich wurde hier der Nebenfarbteiler NFT unter einem Winkel von kleiner 45 Grad zur optischen Achse angeordnet.
Vorteilhaft ist durch die Anordnung der Strahlteiler mit einem Winkel von kleiner 45 Grad die Filterwirkung des HFT und NFT so stark (OD grösser 5 bzw. 3), dass keine zusätzlichen Emissionsfilter EF mehr vor den Pinholes vorgesehen sind.
Erfindungsgemäß wird das Schichtdesign so verändert, dass es auf Winkel unter 45 Grad, vorteilhaft auf Winkel bis 20 Grad gerichtet ist, d.h. bei diesem Auftreffwinkel seine optimalen Reflektions- und Transmissionseigenschaften aufweist. Auf spezielle Einfallswinkel abgestimmte Beschichtungen bei Notchfiltern sind beispielsweise bei http://www.semrock.com/Catatog/Notch SpectrumvsAOl.htm realisiert.
Erfindungsgemäß wurde erkannt, dass es für Farbteiler vorteilhaft ist dass die optische Dichte der Beschichtung abnimmt je weiter man sich von einem Auftreffwinkel von Null entfernt.

Erfindungsgemäss wird mit den Winkeln unter 45 Grad eine höhere optische Dichte der Beschichtung erreicht.

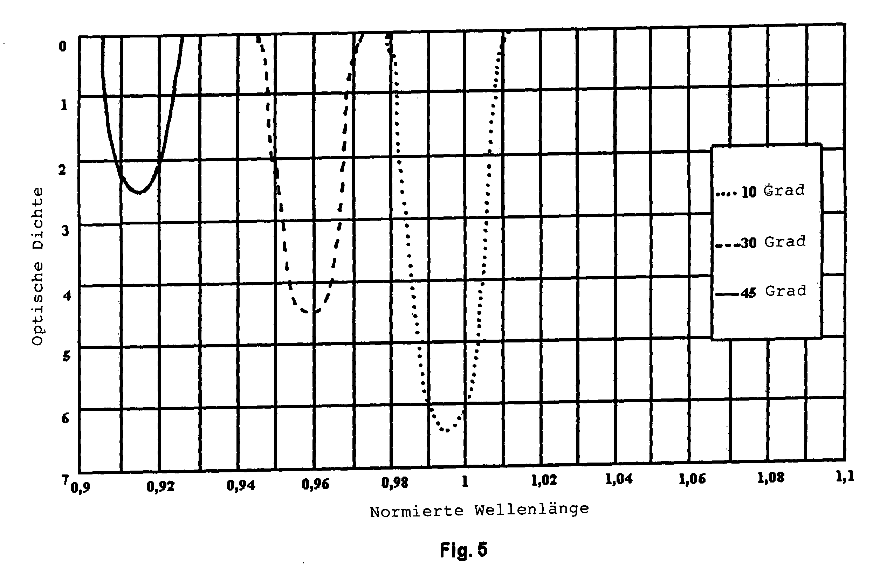

In Fig. 5 ist beispielhaft eine mögliche Filtercharakteristik (Transmission in Abhängigkeit von der Wellenlänge) für verschiedenen Winkel dargestellt.

Deutlich wird die starke Unterdrückung der Anregungswellenlängen in Transmission, d.h. in Richtung der Detektoren für Winkel kleiner 45 Grad zu optischen Achse.

Besonders vorteilhaft ist die Anordnung der HFT und oder NFT mit einem Winkel von 5 bis 20 Grad. Um hierbei eine verbesserte räumliche Separation zwischen dem am Farbteiler reflektierten Eingangs- und Ausgangsstrahl zu realisieren, kann zusätzlich ein Spiegel eingebracht werden (siehe Abb. 4), der eine Erhöhung des Winkels der aus der Lichtquelle kommenden Strahlung in Bezug zur optischen Achse bewirkt. Dieser Spiegel kann besonders vorteilhaft auch Bestandteil des HFT / NFT sein.

## Patentansprüche

1. Laser - Scanning - Mikroskop zur Fluoreszenzuntersuchung, in dem der Beleuchtungs- und der Detektionsstrahlengang durch einen dichroitischen Hauptfarbteiler (1) optisch verbunden sind, das detektierte Probenlicht mittels weiterer Strahlteiler (2) in mehrere Detektoren geleitet wird
**dadurch gekennzeichnet dass**
der Einfallswinkel des Beleuchtungslichtes und/ oder der Einfallswinkel des Probenlichtes auf der Teilerfläche mindestens des Hauptfarbteilers oder mindestens eines weiteren Teilers weniger als 45 Grad beträgt

2. Laser - Scanning - Mikroskop nach Anspruch 1, wobei der Einfallswinkel kleiner 20 Grad ist

3. Laser - Scanning - Mikroskop nach Anspruch 1 oder 2, wobei
der Hauptfarbteiler (1) eine Unterdrückung des Beleuchtungslichts von mindestens OD=5 und der Nebenfarbteiler (2) eine Unterdrückung des Beleuchtungslichts von kleiner OD= 3 aufweisen

4. Laser - Scanning - Mikroskop nach einem der Ansprüche 1-3,
wobei der Strahlteiler (2) als variabler Verlaufsfilter ausgebildet und entlang des Verlaufs verschiebbar angeordnet ist
